# FASCICULE DE BREVET EUROPEEN

(11) **EP 3 598 599 B1**
(45) Date de publication et mention de la délivrance du brevet: **30.09.2020**
(21) Numéro de dépôt: 19182580.1
(22) Date de dépôt: 26.06.2019
(51) Int. Cl.: H02J 3/38, H02J 9/06

(54) **DISPOSITIF DE GESTION DE DEUX ALIMENTATIONS SANS INTERRUPTION EN COURANT ALTERNATIF MONTÉES EN PARALLÈLE ET SYSTÈME ASSOCIÉ**
VORRICHTUNG ZUR VERWALTUNG VON ZWEI IN PARALLEL GESCHALTETEN UNTERBRECHUNGSFREIEN STROMVERSORGUNGEN, UND ZUGEHÖRIGES SYSTEM
MANAGEMENT DEVICE FOR TWO AC UNINTERRUPTIBLE POWER SUPPLIES COUPLED IN PARALLEL, AND SYSTEM THEREFOR

(30) Priorité: 20.07.2018 FR 1856752
(43) Date de publication de la demande: 22.01.2020
(73) Titulaire: Vertiv Industrial Systems S.A.S., 69680 Chassieu (FR)
(72) Inventeur: LINDEN, Jean, 69680 CHASSIEU (FR); MERIGOT, Bertrand, 69200 VENISSIEUX (FR); QUEYROI, Pierre, 38460 SAINT ROMAIN DE JALIONAS (FR)
(74) Mandataire: Cabinet Laurent & Charras

(56) Documents cités:
- JP-A- 2004 236 427
- JP-A- 2008 131 808
- JP-A- 2009 303 419
- JP-A- 2012 005 324
- JP-A- 2015 180 136
- US-A1- 2015 207 362

## Description

### DOMAINE TECHNIQUE

L'invention concerne un dispositif de gestion de deux alimentations sans interruption en courant alternatif montées en parallèle.

L'invention concerne plus particulièrement un dispositif visant à améliorer les opérations de maintenance sur l'une de ces deux alimentations sans interruption.

L'invention trouve une application particulièrement avantageuse pour alimenter des serveurs informatiques sensibles ou les applications industrielles stratégiques.

### ARRIERE-PLAN DE L'INVENTION

Une alimentation sans interruption, ou ASI, est une interface entre un réseau électrique et une ou plusieurs charges sensibles. Une alimentation sans interruption en courant alternatif vise plus particulièrement une alimentation sans interruption qui délivre un courant et une tension alternatifs.

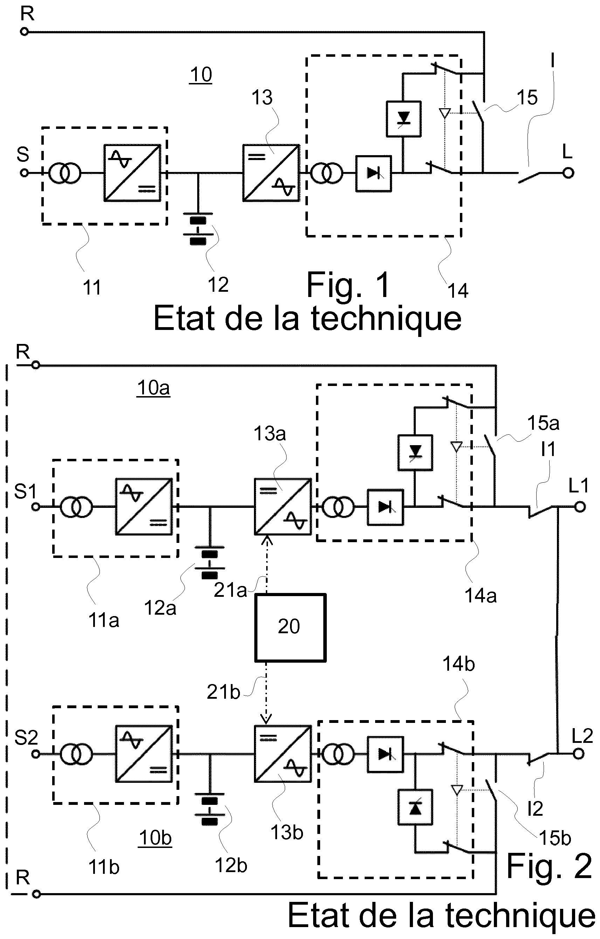

De façon générale, tel qu'illustré sur la figure 1, une ASI **10** est constituée de cinq éléments principaux disposés entre le réseau électrique **S** et la charge **L** :
- un redresseur-chargeur **11,**
- une source de stockage d'énergie **12,**
- un onduleur **13,**
- un ensemble commutateur statique **14,** constitué d'un commutateur statique onduleur et d'un commutateur statique de voie de secours,
- un commutateur de maintenance **15.**

Le redresseur-chargeur **11** est connecté au réseau électrique **S.** Il convertit le courant alternatif du secteur en courant continu contrôlé et régulé servant à recharger la source de stockage d'énergie **12** et à alimenter l'onduleur **13.**

La source de stockage d'énergie **12** stocke l'énergie en provenance du redresseur-chargeur **11**. Cette source de stockage d'énergie **12** est configurée pour se décharger et alimenter la charge **L** lorsqu'une coupure de courant survient au niveau du redresseur-chargeur **11.**

L'onduleur **13** assure la conversion du courant continu en courant alternatif propre et régulé pour alimenter la charge sensible **L** par l'intermédiaire de l'ensemble commutateur statique **14.** L'onduleur **13** est la source prioritaire de la charge **L,** utilisée quasiment en permanence.

L'ensemble commutateur statique **14** est un système de permutation de source automatique apte à prévenir toute interruption de l'alimentation de la charge **L** en alimentant la charge **L** par une voie de secours **R.** Plus précisément, l'ensemble commutateur statique **14** agit avec une action de chevauchement de sorte à anticiper une perte d'alimentation électrique par l'onduleur **13.** Ainsi, la voie de secours **R** n'alimente la charge **L** que de manière exceptionnelle, en cas de problème sur l'onduleur **13.** La voie de secours **R** est en général moins fiable et de moins bonne qualité que la tension délivrée par l'onduleur **13.**

Outre l'ensemble commutateur statique **14,** le commutateur de maintenance **15** permet également d'alimenter la charge **L** par la voie de secours **R** afin d'effectuer des maintenances sur le redresseur-chargeur **11,** la source de stockage d'énergie **12,** l'onduleur **13** ou l'ensemble commutateur statique **14.** Ce commutateur de maintenance **15** permet aux personnels de maintenance de procéder aux interventions de maintenance et de réparation sur l'ASI **10** en toute sécurité, en isolant totalement toutes les parties importantes, tout en reliant la charge **L** directement à la voie de secours. En outre, la charge **L** peut être déconnectée de l'ASI **10** par un interrupteur de fin de ligne **I.**

Pour répartir la puissance demandée par une charge sensible **L,** il est connu d'utiliser deux ASI **10a-10b** montées en parallèle. Cette configuration parallèle peut également être utilisée pour alimenter deux charges distinctes **L1-L2**, tel qu'illustré sur la figure 2. Cependant, lorsque les deux ASI **10a-10b** montées en parallèle délivrent un courant alternatif aux charges **L1-L2** connectées entre elles, il est nécessaire que les deux ASI **10a-10b** génèrent un courant en phase.

Pour ce faire, le fonctionnement des deux onduleurs **13a-13b** des deux ASI **10a-10b** est commandé par un module de gestion de mise en parallèle **20** transmettant, sur des câbles de commande **21a-21b,** les signaux nécessaires pour synchroniser les deux onduleurs entre eux, et pour équilibrer entre les deux onduleurs **13a-13b,** le courant absorbé par les charges **L1-L2.**

Les deux ASI **10a-10b** peuvent être connectées au même réseau électrique **S** ou à deux réseaux électriques distincts **S1-S2**. La voie de secours **R** des deux ASI est obligatoirement la même pour les deux ASI, étant donné que les deux entrées de voie de secours peuvent se retrouver en parallèle via les deux commutateurs statiques de voie de secours **14a-14b.**

Pour fiabiliser l'alimentation des charges **L1-L2**, chaque ASI **10a-10b** est configurée pour pouvoir alimenter seule les deux charges **L1-L2.**

Pour procéder à une opération de maintenance sur l'une ou l'autre des deux ASI **10a-10b**, une première étape consiste à arrêter l'onduleur **13a-13b** de l'une des deux ASI **10a-10b** sur laquelle ladite opération de maintenance est envisagée. Lors de l'arrêt de cet onduleur **13a-13b,** l'autre ASI **10a-10b** alimente seule les deux charges **L1-L2.** Ensuite, l'interrupteur de fin de ligne **I1-I2** associé à cet onduleur **13a-13b** peut être ouvert. Afin de pouvoir intervenir en toute sécurité sur l'ASI **10a-10b** qui a été déconnectée des charges **L1-L2**, il est ensuite nécessaire d'isoler complètement l'ASI **10a-10b.** Pour ce faire, il convient de déconnecter les câbles de commande **21a-21b** assurant la mise en parallèle des deux ASI **10a-10b.** Les opérations de maintenance sur cette ASI **10a-10b** peuvent ensuite être réalisées, puis l'ASI **10a-10b** peut être remise sous tension.

Pour effectuer la remise sous tension, il convient alors de reconnecter tous les câbles de commande **21a-21b** assurant la mise en parallèle des deux ASI **10a-10b**, de refermer l'interrupteur de fin de ligne **I1-I2** et de redémarrer l'onduleur **13a-13b** de l'ASI **10a-10b** concernée par la maintenance.

Il s'ensuit qu'il est particulièrement long et délicat de procéder à une maintenance sur l'une des deux ASI **10a-10b** montées en parallèle et délivrant un courant alternatif.

Le problème technique de l'invention concerne donc l'amélioration de la procédure de maintenance d'une ASI délivrant un courant alternatif et montée en parallèle avec une autre ASI.

Les documents JP2009303419A, US2015/207362A1, JP2015180136A, JP2008131808A, JP2012005324A et JP2004236427A illustrent l'arrière-plan technologique.

### EXPOSE DE L'INVENTION

Pour résoudre ce problème technique, l'invention propose un dispositif de gestion de deux ASI en courant alternatif montées en parallèle, le dispositif étant configuré pour commander le module de gestion de mise en parallèle en fonction de l'état des onduleurs et des interrupteurs de fin de ligne. En désactivant le module de gestion de mise en parallèle lorsqu'un onduleur est arrêté ou qu'un interrupteur est ouvert, ce dispositif de gestion permet de faciliter grandement la procédure de maintenance, car il n'est plus nécessaire de déconnecter et de reconnecter les câbles de commande assurant la mise en parallèle des deux ASI.

La démarche naturelle d'un homme du métier opérant sur les ASI en courant alternatif montées en parallèle est de réduire le nombre de composants afin de limiter les risques de disfonctionnement de l'un ou l'autre des composants.

En outre, les ASI en courant alternatif montées en parallèle fonctionnent le plus souvent avec des niveaux de puissance très importants qui présentent des risques pour les personnes intervenant sur ces équipements. Pour réduire les risques physiques, il est également recherché de réduire le nombre de câbles électriques. Contrairement à cette pratique, l'invention propose de rajouter un dispositif de gestion des câbles de contrôle et de commande à deux ASI en courant alternatif montées en parallèle afin de faciliter les opérations de maintenance.

A cet effet, selon un premier aspect, l'invention concerne un dispositif de gestion de deux alimentations sans interruption en courant alternatif montées en parallèle, ledit dispositif de gestion comportant :
- des moyens de supervision de l'état des interrupteurs de fin de ligne de chaque ASI ;
- des moyens de supervision de l'état des onduleurs de chaque ASI ; et
- des moyens de génération d'un signal de commande apte à commander l'inhibition d'un module de gestion de mise en parallèle des deux ASI lorsque lesdits moyens de supervision indiquent qu'un onduleur est arrêté ou qu'un interrupteur de fin de ligne est ouvert.

L'invention permet ainsi de simplifier le processus de maintenance de deux ASI en courant alternatif montées en parallèle. En effet, pour procéder à une maintenance sur l'une ou l'autre des deux ASI, il suffit d'ouvrir un interrupteur de fin de ligne et d'arrêter l'onduleur associé. Il n'est plus nécessaire d'arrêter l'onduleur avant l'ouverture de l'interrupteur, et ces deux actions peuvent être réalisées dans n'importe quel ordre puisque le dispositif de gestion de l'invention désactive automatiquement le module de gestion de mise en parallèle lorsqu'un onduleur est arrêté ou qu'un interrupteur de fin de ligne est ouvert. Il s'ensuit que l'autre ASI assure automatiquement l'alimentation d'une ou de plusieurs charges disposées en sortie des deux ASI.

Par ailleurs, contrairement au processus de l'état de la technique, il n'est plus nécessaire de déconnecter les câbles reliant le module de gestion de mise en parallèle avec les onduleurs.

Pour effectuer la remise sous tension, il suffit de refermer l'interrupteur de fin de ligne et de redémarrer l'onduleur de l'ASI sur laquelle la maintenance a été réalisée. Lorsque l'onduleur et l'interrupteur de fin de ligne sont prêts, l'inhibition du module de gestion de mise en parallèle est stoppée, et ce module peut reprendre son fonctionnement normal et assurer la synchronisation des signaux des deux ASI.

Au sens de l'invention, l'inhibition du module de gestion de mise en parallèle imposée par le signal de commande implique que le module de gestion de mise en parallèle est toujours prêt à fonctionner, mais que son fonctionnement est bloqué tant que les conditions imposées sur le signal de commande ne sont pas respectées. Il s'ensuit qu'il n'est pas nécessaire de redémarrer le module de gestion de mise en parallèle après chaque opération de maintenance. L'invention permet ainsi d'améliorer la rapidité et la sécurité des opérations de maintenance.

L'invention peut être utilisée pour deux ASI alimentant une même charge ou pour deux ASI alimentant deux charges distinctes. De la même manière, les deux ASI peuvent être connectées au même réseau électrique ou à deux réseaux électriques distincts. Pour fiabiliser l'alimentation de chaque charge, chaque ASI est configurée pour pouvoir alimenter seule les deux charges.

De plus, certaines configurations peuvent utiliser un interrupteur de liaison disposé entre les deux charges de sorte à basculer d'un fonctionnement parallèle à un fonctionnement dans lequel chaque ASI alimente une charge distincte. Pour basculer d'un fonctionnement parallèle à un fonctionnement indépendant, il suffit d'ouvrir l'interrupteur de liaison.

Cependant, la fermeture de cet interrupteur de liaison nécessite classiquement des conditions bien spécifiques, de préférence lorsque les deux onduleurs sont arrêtés et que les deux charges sont alimentées par une même voie de secours. En effet, lorsque les deux ASI fonctionnent de manière autonome, des décalages de phase peuvent exister entre les deux ASI et celles-ci ne peuvent pas être directement reconnectées en parallèle.

En outre, il peut également exister des décalages de phase entre la voie de secours et l'onduleur. Il est donc nécessaire d'utiliser une sécurité matérielle qui garantit que les commutateurs statiques de voie de secours ne peuvent pas être activés de manière autonome. Il est donc actuellement impossible de fermer un seul des deux commutateurs statiques de voie de secours, sans fermer simultanément le deuxième.

Cependant, cette sécurité matérielle n'est plus utile lorsque les deux ASI fonctionnent de manière indépendante, c'est-à-dire lorsque l'interrupteur de liaison est ouvert. Pour résoudre ce problème, un mode de réalisation propose d'utiliser le dispositif de gestion de l'invention pour inhiber le fonctionnement des sécurités matérielles lorsque l'interrupteur de liaison est ouvert.

Selon un mode de réalisation, les deux ASI comportant une sécurité matérielle contre l'activation d'un seul commutateur statique de voie de secours et un interrupteur de liaison disposé entre les charges, ledit dispositif de gestion comporte :
- des moyens de supervision de l'état de l'interrupteur de liaison ; et
- des moyens de génération d'un signal d'inhibition associé à chaque sécurité matérielle de chaque ASI apte à commander l'inhibition de la sécurité matérielle lorsque lesdits moyens de supervision indiquent que l'interrupteur de liaison est ouvert.

Ce mode de réalisation simplifie le processus de maintenance en permettant d'obtenir un fonctionnement indépendant des deux ASI lorsque l'interrupteur de liaison est ouvert, avec notamment la possibilité de fonctionner sur onduleur dans une ASI et de fonctionner sur voie de secours dans l'autre ASI (que ce soit par commutateur statique voie de secours, ou par commutateur de maintenance).

Il est possible de passer assez facilement d'une configuration parallèle à une configuration dans laquelle les deux ASI fonctionnent de manière indépendante en ouvrant l'interrupteur de liaison : ceci est possible dans la plupart des états de fonctionnement imaginables. La fermeture de cet interrupteur de liaison est plus complexe car elle requiert que les deux ASI se trouvent dans des états de fonctionnement bien précis, qui seront détaillés ci-dessous.

Pour guider l'opérateur dans les manipulations de cet interrupteur de liaison, aussi bien à l'ouverture qu'à la fermeture, un mode de réalisation de l'invention propose d'utiliser un voyant lumineux commandé par le dispositif de gestion de l'invention pour indiquer si la manœuvre de l'interrupteur de liaison est possible.

Selon un mode de réalisation, ledit dispositif de gestion comporte des moyens de supervision de l'état d'alimentation des charges, et des moyens de commande d'un voyant lumineux configuré pour indiquer si l'interrupteur de liaison peut être manœuvré ; les moyens de commande étant configurés pour indiquer que l'interrupteur de liaison peut être ouvert lorsque lesdits moyens de supervision indiquent que les deux charges sont alimentées, ou lorsqu'aucune des deux charges n'est pas alimentée.

Ce mode de réalisation permet d'indiquer que l'interrupteur de liaison peut être ouvert lorsque ceci ne risque pas de provoquer la perte d'une des deux charges.

Selon un mode de réalisation, ledit dispositif de gestion comporte des moyens de supervision de l'état des commutateurs de maintenance, les moyens de commande étant configurés pour indiquer que l'interrupteur de liaison peut être fermé lorsque lesdits moyens de supervision indiquent que les deux commutateurs de maintenance sont fermés.

Ce mode de réalisation permet d'indiquer que l'interrupteur de liaison peut être fermé lorsque les deux charges sont alimentées par la voie de secours par le biais des commutateurs de maintenance.

Selon un mode de réalisation, ledit dispositif de gestion comporte des moyens de supervision de l'état des commutateurs statiques de voie de secours, les moyens de commande étant configurés pour indiquer que l'interrupteur de liaison peut être fermé lorsque lesdits moyens de supervision indiquent que les deux commutateurs statiques de voie de secours sont fermés.

Ce mode de réalisation permet d'indiquer que l'interrupteur de liaison peut être fermé lorsque les deux charges sont alimentées par la voie de secours par le biais des commutateurs statiques de voie de secours.

Selon un mode de réalisation, ledit dispositif de gestion comporte des moyens de supervision de l'état de fonctionnement et de synchronisation des onduleurs, les moyens de commande étant configurés pour indiquer que l'interrupteur de liaison peut être fermé lorsque lesdits moyens de supervision indiquent que les deux onduleurs sont en fonctionnement et que les deux onduleurs sont synchronisés chacun par sa voie de secours.

Ce mode de réalisation permet d'indiquer que l'interrupteur de liaison peut être fermé lorsque les deux charges sont alimentées par les deux onduleurs, synchronisés par leur voie de secours, et donc synchronisés entre eux.

Selon un mode de réalisation, les moyens de commande sont configurés pour indiquer que l'interrupteur de liaison peut être fermé lorsque lesdits moyens de supervision indiquent que l'une des charges n'est pas alimentée, ou que les deux charges ne sont pas alimentées.

Ce mode de réalisation permet d'indiquer que l'interrupteur de liaison peut être fermé lorsqu'au moins l'une des deux charges n'est pas alimentée.

Selon un second aspect de l'invention, l'invention concerne un système d'alimentation intégrant deux alimentations sans interruption (ASI) en courant alternatif montées en parallèle par l'intermédiaire d'un interrupteur de liaison, chaque ASI comportant :
- un redresseur-chargeur connecté à un réseau électrique et apte à convertir le courant alternatif du secteur en courant continu contrôlé et régulé ;
- une source de stockage d'énergie connectée au redresseur-chargeur et alimentée par le courant continu issu du redresseur-chargeur ;
- un onduleur alimenté par le redresseur-chargeur ou la source de stockage d'énergie assurant la conversion du courant continu en courant alternatif propre et régulé pour alimenter au moins une charge ;
- un ensemble commutateur statique constitué d'un commutateur statique onduleur et d'un commutateur statique voie de secours, disposé entre l'onduleur et au moins une charge, agissant comme un système de permutation de source automatique, apte à prévenir toute interruption de l'alimentation de la charge en alimentant la charge par une voie de secours ;
- un commutateur de maintenance configuré pour alimenter la charge par la voie de secours afin d'effectuer des opérations de maintenance sur le redresseur-chargeur, la source de stockage d'énergie, l'onduleur ou le commutateur statique ;
- un interrupteur de fin de ligne disposé devant la charge ;
les deux onduleurs des deux ASI étant commandés par un module de gestion de mise en parallèle transmettant les signaux nécessaires pour synchroniser les deux onduleurs entre eux, et pour équilibrer entre les deux onduleurs, le courant absorbé par la charge ;
ledit système d'alimentation comprenant en outre un dispositif de gestion intégrant :
- des moyens de supervision de l'état des interrupteurs de fin de ligne de chaque ASI;
- des moyens de supervision de l'état des onduleurs de chaque ASI ; et
- des moyens de génération d'un signal de commande apte à commander l'inhibition d'un module de gestion de mise en parallèle des deux ASI lorsque lesdits moyens de supervision indiquent qu'un onduleur est arrêté ou qu'un interrupteur de fin de ligne est ouvert.

### DESCRIPTION SOMMAIRE DES FIGURES

La manière de réaliser l'invention, ainsi que les avantages qui en découlent, ressortiront bien de la description des modes de réalisations qui suivent, à l'appui des figures annexées dans lesquelles :
- la figure 1, illustrant l'état de la technique, est une représentation schématique d'une alimentation sans interruption en courant alternatif ;
- la figure 2, illustrant l'état de la technique, est une représentation schématique de deux ASI en courant alternatif montées en parallèle ;
- la figure 3 est une représentation schématique de deux ASI en courant alternatif montées en parallèle associées à un dispositif de gestion selon un premier mode de réalisation de l'invention ; et
- la figure 4 est une représentation schématique de deux ASI en courant alternatif montées en parallèle associées à un dispositif de gestion selon un second mode de réalisation de l'invention.

### DESCRIPTION DETAILLEE DE L'INVENTION

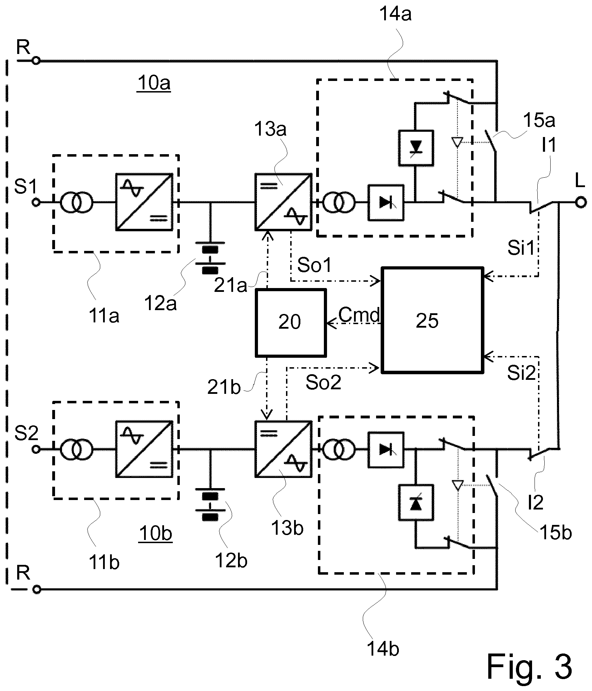

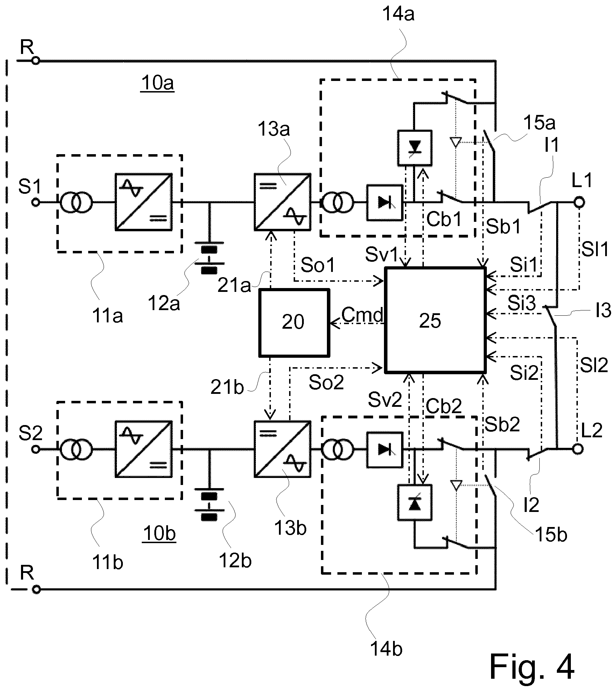

Tel qu'illustré sur la figure 3, l'invention concerne un système d'alimentation intégrant deux alimentations sans interruption (ASI) en courant alternatif **10a, 10b** montées en parallèle. Les deux ASI **10a, 10b** présentent des structures identiques. Le premier élément de chaque ASI **10a, 10b** est un redresseur-chargeur **11a, 11b** connecté à un réseau électrique. Les deux ASI **10a**, **10b** peuvent être connectées au même réseau électrique **S** ou de réseaux électriques distincts **S1**, **S2** tel qu'illustré sur les figures 3 et 4.

Le ou les réseaux électriques **S1**, **S2** délivrent une tension et un courant alternatifs soumis à des perturbations issues des harmoniques générées dans le transport de l'énergie. Pour fournir à la charge **L, L1, L2** une énergie plus propre, c'est-à-dire des signaux présentant moins d'harmoniques, chaque ASI **10a**, **10b** transforme l'énergie issue du réseau en une énergie continue par l'intermédiaire du redresseur-chargeur **11a, 11b**. Le courant et la tension continus de sortie de ce redresseur-chargeur **11a, 11b** sont contrôlés et régulés de sorte à filtrer les perturbations présentes sur le réseau électrique **S1**, **S2.**

Ce courant continu alimente un onduleur **13a, 13b** configuré pour convertir le courant continu en un courant alternatif propre et régulé pour alimenter la charge **L, L1, L2.**

Ce courant continu permet d'alimenter également une source de stockage d'énergie **12a, 12b,** telle qu'une batterie au plomb, au nickel-cadmium, ou au lithium-ion. Cette source de stockage d'énergie **12a, 12b** est configurée pour alimenter l'onduleur **13a, 13b,** et donc la charge **L, L1**, **L2** lorsqu'une coupure de l'alimentation du réseau électrique **S1**, **S2** survient.

Lorsque que le réseau électrique **S1**, **S2** est indisponible et que la source de stockage d'énergie **12a, 12b** est déchargée, il est prévu d'alimenter la charge **L, L1**, **L2** par une voie de secours **R.** Cette voie de secours **R** peut également être utilisée lorsque l'onduleur **13a, 13b** présente une défaillance technique. Pour transférer l'alimentation de la charge **L, L1**, **L2** depuis la voie principale sur la voie de secours **R,** un ensemble commutateur statique **14a, 14b** est disposé entre l'onduleur **13a, 13b** et la charge **L, L1**, **L2.** Cet ensemble commutateur statique **14a, 14b** est constitué d'un commutateur statique onduleur et d'un commutateur statique de voie de secours. De préférence, cet ensemble commutateur statique **14a, 14b** agit avec une action de chevauchement de sorte à anticiper une perte d'alimentation électrique de l'onduleur **13a, 13b.** Il est également possible de basculer sur la voie de secours **R** pour réaliser une maintenance sur la ligne principale. Pour ce faire, un commutateur de maintenance **15a, 15b** est disposé après l'ensemble commutateur statique **14a, 14b,** constitué d'un interrupteur reliant directement la charge **L, L1**, **L2** à la voie de secours **R.**

De préférence, le commutateur de maintenance **15a, 15b** commande également l'ouverture d'un interrupteur reliant la charge **L, L1**, **L2** à la voie principale lorsque l'alimentation de la charge **L, L1**, **L2** est assurée par la voie de secours **R.** A la sortie de chaque ASI **10a**, **10b**, un interrupteur de fin de ligne **I1**, **I2** permet de connecter ou non une ASI **10a**, **10b** à la charge **L**, **L1**, **L2**.

En outre, les deux onduleurs **13a, 13b** sont commandés par un module de gestion de mise en parallèle **20** transmettant les signaux nécessaires pour synchroniser les deux onduleurs **13a, 13b** entre eux, et pour équilibrer entre les deux onduleurs **13a, 13b,** le courant absorbé par la charge **L, L1**, **L2.**

L'invention concerne plus particulièrement un dispositif de gestion **25** des deux ASI **10a**, **10b.** Dans le mode de réalisation de la figure 3, ce dispositif de gestion **25** commande uniquement l'inhibition ou non du module de gestion de mise en parallèle **20** en fonction de signaux **Si1, Si2** représentant la position des interrupteurs de fin de ligne **I1**, **I2** et de signaux **So1, So2** représentant le fonctionnement ou non des onduleurs **13a, 13b.** Ce dispositif de gestion **25** peut être réalisé par des portes logiques ou un circuit programmable de sorte à générer un signal de commande **Cmd** du module de gestion de mise en parallèle **20.** Ce dispositif de gestion **25** est configuré afin que le signal de commande **Cmd** entraine l'inhibition du module de gestion de mise en parallèle **20** lorsqu'un onduleur **13a, 13b** est arrêté ou qu'un interrupteur de fin de ligne **I1**, **I2** est ouvert.

En variante, il est également possible d'intégrer les commandes réalisées par ce dispositif de gestion **25** et le module de gestion de mise en parallèle **20** dans une carte de contrôle de chaque ASI **10a**, **10b.**

Tel qu'illustré sur la figure 4, le dispositif de gestion **25** peut gérer un plus grand nombre de signaux. Ainsi, le dispositif de gestion **25** peut s'intégrer dans un système comportant un interrupteur de liaison **I3** apte à passer les deux ASI **10a**, **10b** d'un fonctionnement parallèle à un fonctionnement indépendant. Dans cette configuration, les ASI **10a**, **10b** présentent également une sécurité matérielle contre l'activation d'un seul commutateur statique de voie de secours.

Pour permettre l'activation d'un seul commutateur statique de voie de secours lorsque les deux ASI **10a**, **10b** fonctionnent indépendamment l'une de l'autre, le dispositif de gestion **25** peut capter un signal **Si1, Si2, Si3** représentant l'état des interrupteurs de fin de ligne **I1**, **I2** et de l'interrupteur de liaison **I3**, et générer un signal d'inhibition **Cb1, Cb2** de chaque sécurité matérielle de chaque ASI **10a**, **10b** lorsqu'un interrupteur de fin de ligne **I1**, **I2** est ouvert, ou lorsque l'interrupteur de liaison **I3** est ouvert.

Un voyant lumineux peut également être utilisé pour indiquer à un opérateur que l'interrupteur de liaison **I3** peut être ouvert, c'est-à-dire que le système se trouve dans une configuration pour laquelle il n'existe pas de risque de perdre une charge, ou que cet interrupteur peut être fermé, c'est-à-dire que le système se trouve dans une configuration pour laquelle il n'existe pas de risque de déphasage des sorties des deux ASI **10a**, **10b.**

Par exemple, ce voyant lumineux peut indiquer une couleur verte lorsque l'interrupteur de liaison **I3** peut être manœuvré, et indiquer une couleur rouge lorsque l'interrupteur de liaison **I3** ne doit pas être manœuvré.

Pour indiquer à l'opérateur les états du système dans lesquels l'interrupteur de liaison **I3** peut être manœuvré, le dispositif de gestion **25** intègre :
▪ des signaux **Sb1, Sb2** représentant l'état des commutateurs de maintenance **15a, 15b,**
▪ des signaux **Svl, Sv2** représentant l'état des commutateurs statiques de voie de secours,
▪ des signaux **So1, So2** représentant l'état de fonctionnement des onduleurs **13a, 13b,** ▪ des signaux **Sl1, Sl2** représentant l'état d'alimentation des charges **L1**, **L2,**
▪ des signaux **Si1, Si2, Si3** représentant l'état des interrupteurs de fin de ligne **I1**, **I2**, et de l'interrupteur de liaison **I3**.

Lorsque l'interrupteur de liaison I3 est fermé, il existe deux situations dans lesquelles le dispositif de gestion **25** indique un signal vert car l'interrupteur de liaison **I3** peut être ouvert :
▪ la première situation apparaît lorsque les deux charges **L1**, **L2** sont alimentées, ce qui est l'état de fonctionnement habituel ; et
▪ la seconde situation apparaît lorsque aucune des deux charges **L1**, **L2** n'est alimentée.

Lorsque l'interrupteur de liaison **I3** est ouvert, il existe trois situations dans lesquelles le dispositif de gestion **25** indique un signal vert car l'interrupteur de liaison **I3** peut être fermé :
▪ la première situation apparaît lorsque les deux ASI **10a**, **10b** fonctionnent sur la voie de secours **R,** soit parce que les deux commutateurs de maintenance **15a, 15b** sont fermés, soit parce que les deux onduleurs **13a, 13b** sont arrêtés et que l'ensemble commutateur statique **14a, 14b** a basculé automatiquement sur la voie de secours **R ;**
▪ la deuxième situation apparaît lorsque les deux onduleurs **13a, 13b** fonctionnent en phase, c'est-à-dire que chaque onduleur est synchronisé par sa voie de secours ; et
▪ la troisième situation apparaît lorsque au moins une des deux charges n'est pas alimentée.

En dehors de ces situations, l'interrupteur de liaison **I3** ne doit pas être manœuvré et le dispositif de gestion **25** indique un signal rouge. L'opérateur peut ainsi connaître facilement les instants pour lesquels l'interrupteur de liaison **I3** peut être manœuvré en toute sécurité.

De manière plus générale, l'invention permet de faciliter les opérations de maintenance sur deux ASI courant alternatif **10a**, **10b** montées en parallèle.

## Revendications

1. Dispositif de gestion (25) de deux alimentations sans interruption (ASI) en courant alternatif (10a, 10b) montées en parallèle, ***caractérisé en ce que*** ledit dispositif de gestion (25) comporte :
- des moyens de supervision (Si1, Si2) de l'état des interrupteurs de fin de ligne (I1, 12) de chaque ASI (10a, 10b) ;
- des moyens de supervision (So1, So2) de l'état des onduleurs (13a, 13b) de chaque ASI (10a, 10b) ; et
- des moyens de génération d'un signal de commande (Cmd) apte à commander l'inhibition d'un module de gestion de mise en parallèle (20) des deux ASI (10a, 10b) lorsque lesdits moyens de supervision (Si1, Si2, So1, So2) indiquent qu'un onduleur (13a, 13b) est arrêté ou qu'un interrupteur de fin de ligne (I1, I2) est ouvert.

2. Dispositif de gestion (25) de deux alimentations sans interruption (ASI) selon la revendication 1, *dans lequel* les deux ASI (10a, 10b) comportent une sécurité matérielle contre l'activation d'un seul commutateur statique de voie de secours et un interrupteur de liaison (I3) disposé entre les charges (L1, L2), ledit dispositif de gestion (25) comportant :
- des moyens de supervision (Si3) de l'état de l'interrupteur de liaison (I3) ; et
- des moyens de génération d'un signal d'inhibition (Cb1, Cb1) associé à chaque sécurité matérielle de chaque ASI (10a, 10b) apte à commander l'inhibition de la sécurité matérielle lorsque lesdits moyens de supervision (Si3) indiquent que l'interrupteur de liaison (I3) est ouvert.

3. Dispositif de gestion (25) de deux alimentations sans interruption (ASI) selon la revendication 2, ***dans lequel*** ledit dispositif de gestion (25) comporte :
- des moyens de supervision (Sl1, Sl2) de l'état d'alimentation des charges (L1, L2) ; et
- des moyens de commande d'un voyant lumineux configuré pour indiquer si l'interrupteur de liaison (I3) peut être manœuvré ;
les moyens de commande étant configurés pour indiquer que l'interrupteur de liaison (I3) peut être ouvert lorsque lesdits moyens de supervision (Sl1, Sl2) indiquent que les deux charges (L1, L2) sont alimentées, ou qu'aucune des deux charges (L1, L2) n'est alimentée.

4. Dispositif de gestion (25) de deux alimentations sans interruption (ASI) selon la revendication 3, ***dans lequel*** ledit dispositif de gestion (25) comporte des moyens de supervision (Sb1, Sb2) de l'état des commutateurs de maintenance (15a, 15b), les moyens de commande étant configurés pour indiquer que l'interrupteur de liaison (I3) peut être fermé lorsque lesdits moyens de supervision (Sb1, Sb2) indiquent que les deux commutateurs de maintenance (15a, 15b) sont fermés.

5. Dispositif de gestion (25) de deux alimentations sans interruption (ASI) selon la revendication 3 ou 4, ***dans lequel*** ledit dispositif de gestion (25) comporte des moyens de supervision (Svl, Sv2) de l'état des commutateurs statiques de voie de secours, les moyens de commande étant configurés pour indiquer que l'interrupteur de liaison (I3) peut être fermé lorsque lesdits moyens de supervision (Svl, Sv2) indiquent que les deux commutateurs statiques de voie de secours (14a, 14b) sont fermés.

6. Dispositif de gestion (25) de deux alimentations sans interruption (ASI) selon l'une des revendications 3 à 5, ***dans lequel*** ledit dispositif de gestion (25) comporte des moyens de supervision (Sol, So2) de l'état de fonctionnement et de synchronisation des onduleurs (13a, 13b), les moyens de commande étant configurés pour indiquer que l'interrupteur de liaison (I3) peut être fermé lorsque lesdits moyens de supervision (Sol, So2) indiquent que les deux onduleurs (13a, 13b) sont en fonctionnement et que les deux onduleurs (13a, 13b) sont synchronisés chacun par sa voie de secours (R).

7. Dispositif de gestion (25) de deux alimentations sans interruption (ASI) selon l'une des revendications 3 à 6, ***dans lequel*** les moyens de commande sont configurés pour indiquer que l'interrupteur de liaison (I3) peut être fermé lorsque lesdits moyens de supervision (Sl1, S12) indiquent que l'une des charges n'est pas alimentée, ou que les deux charges ne sont pas alimentées.

8. Système d'alimentation intégrant deux alimentations sans interruption (ASI) en courant alternatif (10a, 10b) montées en parallèle, chaque ASI (10a, 10b) comportant :
- un redresseur-chargeur (11a, 11b) connecté à un réseau électrique (S) et apte à convertir le courant alternatif du secteur en courant continu contrôlé et régulé ;
- un dispositif de stockage d'énergie (12a, 12b) connectée au redresseur-chargeur (11a, 11b) et alimentée par le courant continu issu du redresseur-chargeur (11a, 11b) ;
- un onduleur (13a, 13b) alimenté par le redresseur-chargeur (11a, 11b) ou par le dispositif de stockage d'énergie (12a, 12b), assurant la conversion du courant continu en courant alternatif propre et régulé pour alimenter au moins une charge (L, L1, L2) ;
- un ensemble commutateur statique (14a, 14b) constitué d'un commutateur statique onduleur et d'un commutateur statique de voie de secours, disposé entre l'onduleur (13a, 13b) et au moins une charge (L, L1, L2), agissant comme un système de permutation de source automatique, apte à prévenir toute interruption de l'alimentation de la charge (L, L1, L2) en alimentant la charge (L, L1, L2) par une voie de secours (R) ;
- un commutateur de maintenance (15a, 15b) configuré pour alimenter la charge (L, L1, L2) par la voie de secours (R) afin d'effectuer des opérations de maintenance sur le redresseur-chargeur (11a, 11b), le dispositif de stockage d'énergie (12a, 12b), l'onduleur (13a, 13b) ou l'ensemble commutateur statique (14a, 14b) ; et
- un interrupteur de fin de ligne (I1, I2) disposé devant la charge (L, L1, L2) ; les deux onduleurs (13a, 13b) des deux ASI (10a, 10b) étant commandés par un module de gestion de mise en parallèle (20) transmettant les signaux nécessaires pour synchroniser les deux onduleurs entre eux, et pour équilibrer entre les deux onduleurs (13a, 13b), le courant absorbé par la charge (L, L1, L2) ;
***caractérisé en ce qu'il*** comporte également un dispositif de gestion (25) selon la revendication 1.

9. Système d'alimentation selon la revendication 8, ***dans lequel*** les deux ASI (10a, 10b) comportent une sécurité matérielle contre l'activation d'un seul commutateur statique de voie de secours et un interrupteur de liaison (I3) disposé entre les charges (L1, L2), ledit dispositif de gestion (25) comportant :
- des moyens de supervision (Si3) de l'état de l'interrupteur de liaison (I3) ; et
- des moyens de génération d'un signal d'inhibition (Cb1, Cb1) associé à chaque sécurité matérielle de chaque ASI (10a, 10b) apte à commander l'inhibition de la sécurité matérielle lorsque lesdits moyens de supervision (Si3) indiquent que l'interrupteur de liaison (I3) est ouvert.

10. Système d'alimentation selon la revendication 9, ***dans lequel*** ledit dispositif de gestion (25) comporte :
- des moyens de supervision (Sl1, S12) de l'état d'alimentation des charges (L1, L2) ; et
- des moyens de commande d'un voyant lumineux configuré pour indiquer si l'interrupteur de liaison (I3) peut être manœuvré ;
les moyens de commande étant configurés pour indiquer que l'interrupteur de liaison (I3) peut être ouvert lorsque lesdits moyens de supervision (Sl1, S12) indiquent que les charges (L1, L2) sont alimentées, ou qu'aucune des charges (L1, L2) n'est alimentée.

11. Système d'alimentation selon la revendication 10, ***dans lequel*** ledit dispositif de gestion (25) comporte des moyens de supervision (Sb1, Sb2) de l'état des commutateurs de maintenance (15a, 15b), les moyens de commande étant configurés pour indiquer que l'interrupteur de liaison (I3) peut être fermé lorsque lesdits moyens de supervision (Sb1, Sb2) indiquent que les deux commutateurs de maintenance (15a, 15b) sont fermés.

12. Système d'alimentation selon la revendication 10 ou 11, ***dans lequel*** ledit dispositif de gestion (25) comporte des moyens de supervision (Svl, Sv2) de l'état des commutateurs statiques de voie de secours, les moyens de commande étant configurés pour indiquer que l'interrupteur de liaison (I3) peut être fermé lorsque lesdits moyens de supervision (Svl, Sv2) indiquent que les deux commutateurs statiques de voie de secours sont fermés.

13. Système d'alimentation selon l'une des revendications 10 à 12, ***dans lequel*** ledit dispositif de gestion (25) comporte des moyens de supervision (Sol, So2) de l'état de fonctionnement et de synchronisation des onduleurs (13a, 13b), les moyens de commande étant configurés pour indiquer que l'interrupteur de liaison (I3) peut être fermé lorsque lesdits moyens de supervision (Sol, So2) indiquent que les deux onduleurs (13a, 13b) sont en fonctionnement et que les deux onduleurs (13a, 13b) sont synchronisés chacun par sa voie de secours (R).

14. Système d'alimentation selon l'une des revendications 10 à 13, ***dans lequel*** les moyens de commande sont configurés pour indiquer que l'interrupteur de liaison (I3) peut être fermé lorsque lesdits moyens de supervision (Sl1, S12) indiquent que l'une des charges n'est pas alimentée, ou que les charges ne sont pas alimentées.

## Patentansprüche

1. Steuerungsvorrichtung (25) für zwei parallel montierte, unterbrechungsfreie Wechselstrom- Stromversorgungen (USV) (10a, 10b), **dadurch gekennzeichnet, dass** diese Steuerungsvorrichtung (25) enthält:
- Mittel zur Überwachung (Si1, Si2) des Zustandes der Endschalter (11, 12) jeder USV (a, b);
- Mittel zur Überwachung (S01, S02) des Zustandes der Wechselrichter (13a, 13b) jeder USV (a, b); und
- Mittel zur Erzeugung eines Steuersignals (Cmd), das in der Lage ist, die Sperrung eines Moduls zur Steuerung des Parallelbetriebs (20) von zwei USV (10a, 10b) zu steuern, wenn die erwähnten Überwachungsmittel (Si1, Si2, S01, S02) darauf hinweisen, dass ein Wechselrichter (13a, 13b) angehalten wurde oder ein Endschalter (11, 12) offen ist.

2. Steuerungsvorrichtung (25) für unterbrechungsfreie Stromversorgungen (USV) nach Anspruch 1, *bei der* die beiden USV (10a, 10b) eine materielle Sicherung gegen die Aktivierung eines einzigen statischen Reservenetz- Umschalters und einen Verbindungsschalter (13) enthalten, angeordnet zwischen den Lasten (L1, L2), wobei die erwähnte Steuerungsvorrichtung (25) enthält
- Überwachungsmittel (Si3) des Zustandes des Verbindungsschalter (13); und
- Mittel zur Erzeugung eines Sperrsignals (Cb1, Cb1), verbunden mit jeder materiellen Sicherheit jedes USV (10a, b), die in der Lage sind, die Sperrung der materiellen Sicherheit zu steuern, wenn die erwähnten Überwachungsmittel (Si3) anzeigen, dass der Verbindungsschalter (13) offen ist.

3. Steuerungsvorrichtung (25) für zwei unterbrechungsfreie Stromversorgungen (USV) nach Anspruch 2, *bei der* die erwähnte Steuerungsvorrichtung (25) enthält:
- Überwachungsmittel (S11, S12) des Versorgungszustandes der Ladungen (L1, L2); und
- Mittel zur Regelung einer Leuchtanzeige, die dazu konfiguriert ist anzuzeigen, ob der Verbindungsschalter (13) betätigt werden kann,
die Kontrollmittel sind dazu konfiguriert anzuzeigen, ob der Verbindungsschalter (13) geöffnet werden kann, wenn die erwähnten Überwachungsmittel (S11, S12) anzeigen, dass die beiden Ladungen (LI, L2) versorgt werden oder dass keine der beiden Ladungen (LI, L2) versorgt wird.

4. Steuerungsvorrichtung (25) für zwei unterbrechungsfreie Stromversorgungen (USV) nach Anspruch 3, ***bei der*** die erwähnte Steuerungsvorrichtung (25) Überwachungsmittel (Sb1, Sb2) des Zustandes der Wartungsschalter (15a, 15b) enthält, die Kontrollmittel sind dazu konfiguriert anzuzeigen, ob der Verbindungsschalter (13) geschlossen werden kann, wenn diese Überwachungsmittel (Sb1, Sb2) anzeigen, dass die beiden Wartungsschalter (15a, 15b) geschlossen sind.

5. Steuerungsvorrichtung (25) für zwei unterbrechungsfreie Stromversorgungen (USV) nach Anspruch 3 oder 4, ***bei der*** die erwähnte Steuerungsvorrichtung (25) Überwachungsmittel (Svl, Sv2) des Zustandes der statischen Reservekreis-Umschalter enthält, die Kontrollmittel sind dazu konfiguriert anzuzeigen, ob der Verbindungsschalter (13) geschlossen werden kann, wenn diese Überwachungsmittel (Sv 1, Sv2) anzeigen, dass die beiden statischen Reservekreis-Umschalter (14a, 14b) geschlossen sind.

6. Steuerungsvorrichtung (25) für zwei unterbrechungsfreie Stromversorgungen (USV) nach einem der Ansprüche 3 bis 5, bei der die erwähnte Steuerungsvorrichtung (25) Überwachungsmittel (SO1, S02) des Betriebs- und Synchronisationszustandes der Wechselrichter (13a, 13b), enthält, die Kontrollmittel sind dazu konfiguriert anzuzeigen, ob der Verbindungsschalter (13) geschlossen werden kann, wenn diese Überwachungsmittel (SO1, S02) anzeigen, dass die beiden Wechselrichter (13a, 13b) in Betrieb sind und dass die beiden Wechselrichter (13a, 13b) jeweils durch ihren Reserve- Stromkreis (R) synchronisiert sind.

7. Steuerungsvorrichtung (25) für zwei unterbrechungsfreie Stromversorgungen (USV) nach einem der Ansprüche 3 bis 6, ***bei der*** die Steuerungsmittel dazu konfiguriert sind anzuzeigen, ob der Verbindungsschalter (13) geschlossen werden kann, wenn diese Überwachungsmittel (S11, S12) anzeigen, dass eine der beiden Lasten nicht versorgt wird, oder dass die beiden Lasten nicht versorgt werden.

8. Versorgungssystem, das zwei parallel montierte unterbrechungsfreie Wechselstrom- Stromversorgungen (USV) (10a, 10b) enthält, wobei jede USV (10a, 10b) enthält:
- ein Gleichrichter-Ladegerät (11a, 11b), verbunden mit einem Stromnetz (S) und in der Lage, den Wechselstrom des Sektors in einen kontrollierten und geregelten Gleichstrom umzuwandeln;
- ein Energiespeichergerät (12a, 12b), verbunden mit dem Gleichrichter-Ladegerät (11a, 11b) und gespeist vom Gleichstrom aus dem Gleichrichter-Ladegerät (11a, 11b),
- ein Wechselrichter (13a, 13b), gespeist vom Gleichrichter- Ladegerät (11a, 11b) oder vom Energiespeichergerät (12a, 12b), der die Umwandlung des Gleichstroms in eigenen und regulierten Wechselstrom gewährleistet, um mindestens eine Ladung (L, L1, L2) zu versorgen;
- eine statische Umschaltereinheit (14a, 14b), bestehend aus einem statischen Umschalter- Wechselrichter und einem statischen Reservestromkreis-Umschalter, angeordnet zwischen dem Wechselrichter (13a, 13b) und mindestens einer Ladung (L, LI, L2), die als automatisches Quellenwechselsystem arbeitet und in der Lage ist, jegliche Stromversorgungsunterbrechung der Ladung (L, LI, L2) zu vermeiden, indem die Ladung (L, LI, L2) durch einen Reservestromkreis gespeist wird (R),
- in Wartungsschalter (15a, 15b) konfiguriert zur Versorgung der Ladung (L, LI, L2) über den Reservestromkreis (R) zur Durchführung von Wartungsarbeiten am Gleichrichter- Ladegerät (11a, 11b), dem Energiespeichergerät (12a, 12b), dem Wechselrichter (13a, 13b) oder der statischen Umschaltereinheit (14a, 141)); sowie
- ein Endschalter (11, 12), angeordnet vor der Ladung (L, LI, L2);
die beiden Wechselrichter (13a, 13b) der beiden USV (10a, 10b) werden dabei durch ein Modul zur Steuerung des Parallelbetriebs (20) gesteuert, dass die notwendigen Signale zum Synchronisieren der beiden Wechselrichter miteinander sendet, um zwischen den beiden Wechselrichtern (13a, 13b) den von der Ladung (L, LI, L2) absorbierten Strom auszugleichen;
***dadurch gekennzeichnet, dass*** es außerdem eine Steuerungsvorrichtung (25) nach Anspruch 1 enthält.

9. Versorgungssystem nach Anspruch 8, ***bei dem*** die beiden USV (10a, 10b) jeweils eine materielle Sicherung gegen die Aktivierung eines einzelnen statischen Umschalters des Reserve- Stromkreises enthalten und einen Verbindungsschalter (13), angeordnet zwischen den Ladungen (LI, L2), dabei enthält diese Steuerungsvorrichtung (25)
- Überwachungsmittel (Si3) des Zustandes des Verbindungsschalters (13); und
- Mittel zur Erzeugung eines Sperrsignals (Cb1, Cb1), verbunden mit jeder materiellen Sicherheit jedes USV (10a, 10b), die in der Lage sind die Sperrung der materiellen Sicherheit zu steuern, wenn die erwähnten Überwachungsmittel (Si3) anzeigen, dass der Verbindungsschalter (13) offen ist.

10. Versorgungssystem nach Anspruch 9, bei dem die erwähnte Steuerungsvorrichtung (25) enthält:
- Überwachungsmittel (S11, S12) des Versorgungszustandes der Ladungen (LI, L2); und
- Steuerungsmittel einer Leuchtanzeige, die dazu konfiguriert ist anzuzeigen, ob der Verbindungsschalter (13) betätigt werden kann, die Steuerungsmittel sind dazu konfiguriert anzuzeigen, ob der Verbindungsschalter (13) geöffnet werden kann, wenn die erwähnten Überwachungsmittel (S11, S12) anzeigen, dass die beiden Ladungen (LI, L2) versorgt werden oder dass keine der beiden Ladungen (LI, L2) versorgt wird.

11. Versorgungssystem nach Anspruch, bei dem diese Steuerungsvorrichtung (25) Überwachungsmittel (Sb1, Sb2) des Zustandes der Wartungsschalter (15a, 15b) enthält, die Steuerungsmittel sind dazu konfiguriert anzuzeigen, ob der Verbindungsschalter (13) geschlossen werden kann, wenn diese Überwachungsmittel (Sb1, Sb2) anzeigen, dass die beiden Wartungsschalter (15a, 15b) geschlossen sind.

12. Versorgungssystem nach Anspruch 10 oder 11, bei dem diese Steuerungsvorrichtung (25) Überwachungsmittel (Svl, Sv2) des Zustandes der statischen Reservekreis-Umschalter enthält, die Steuerungsmittel sind dazu konfiguriert anzuzeigen, ob der Verbindungsschalter (13) geschlossen werden kann, wenn diese Überwachungsmittel (Sv 1, Sv2) anzeigen, dass die beiden statischen Reservekreis-Umschalter geschlossen sind.

13. Versorgungssystem nach Anspruch 10 bis 12, bei dem diese Steuerungsvorrichtung (25) Überwachungsmittel (SO1, S02) des Betriebs- und Synchronisationszustandes der Wechselrichter (13a, 13b) enthält, die Steuerungsmittel sind dazu konfiguriert anzuzeigen, ob der Verbindungsschalter (13) geschlossen werden kann, wenn diese Überwachungsmittel (S01, S02) anzeigen, dass die beiden Wechselrichter (13a, 13b) in Betrieb sind und dass die beiden Wechselrichter (13a, 13b) jeweils durch ihren Reserve- Stromkreis (R) synchronisiert sind.

14. Versorgungssystem nach Anspruch 10 bis 13, bei dem diese Steuerungsmittel dazu konfiguriert sind anzuzeigen, ob der Verbindungsschalter (13) geschlossen werden kann, wenn diese Überwachungsmittel (S11, S12) anzeigen, dass eine der beiden Lasten nicht versorgt wird, oder dass die beiden Lasten nicht versorgt werden.

## Claims

1. A management device (25) for two alternating current (AC) uninterruptible power supplies (UPS) (10a, 10b) connected in parallel, ***characterized in that*** said management device (25) comprises:
- means of monitoring (Si1, Si2) the state of the line end switches (11, 12) of each UPS (10a, 10b);
- means of monitoring (Sol, So2) the state of the inverters (13a, 13b) of each UPS (10a, 10b); and
- means of generating a control signal (Cmd) capable of controlling the inhibition of a paralleling management module (20) of the two UPS (10a, 10b) when said monitoring means (Si1, Si2, So1, So2) indicate that an inverter (13a, 13b) is stopped or that a line end switch (12) is open.

2. A management device (25) for two uninterruptible power supplies (UPS) according to claim 1, ***in which*** the two UPSs (10a, 10b) comprise a hardware safety device against the activation of a single static backup line switch and a connecting switch (13) arranged between the loads (L1, L2), said management device (25) comprising :
- means of monitoring (Si3) the state of the connecting switch (13); and
- means of generating an inhibition signal (Cb1, Cb2) associated with each hardware safety device of each UPS (10a,10b) capable of controlling the inhibition of the hardware safety device when the said monitoring means (Si3) indicates that the connecting switch (13) is open.

3. A device (25) for managing two uninterruptible power supplies (UPS) according to claim 2, ***in which*** said management device (25) comprises:
- means of monitoring (S11, S12) the energizing state of loads (L1, L2); and
- means of controlling an indicator light configured to indicate whether the connecting switch (13) can be operated;
the control means being configured to indicate that the connecting switch (13) can be opened when said supervising means (S11, S12) indicate that both loads (L1, L2) are energized, or that neither load (L1, L2) is energized.

4. A device (25) for managing two uninterruptible power supplies (UPS) according to claim 3, ***in which*** said management device (25) comprises means for monitoring (Sb 1, Sb2) the state of the maintenance switches (15a, 15b), the control means being configured to indicate that the connecting switch (13) can be closed when said monitoring means (Sb 1, Sb2) indicates that both maintenance switches (15a, 15b) are closed.

5. A device (25) for managing two uninterruptible power supplies (UPS) according to claim 3 or 4, ***in which*** said management device (25) comprises means (Svl, Sv2) for monitoring the state of the backup line static switches, the control means being configured to indicate that the connecting switch (13) can be closed when said monitoring means (Svl, Sv2) indicates that both backup line static switches (14a, 14b) are closed.

6. A device (25) for managing two uninterruptible power supplies (UPS) according to one of claims 3 to 5, ***in which*** said management device (25) comprises means (Sol, So2) for monitoring the state of operation and synchronization of the inverters (13a, 13b), the control means being configured to indicate that the connecting switch (13) can be closed when said monitoring means (Sol, So2) indicate that the two inverters (13a, 13b) are in operation and that the two inverters (13a, 13b) are each synchronized by their backup line (R).

7. Device for managing (25) two uninterruptible power supplies (UPS) according to one of claims 3 to 6, ***in which*** the control means are configured to indicate that the connecting switch (13) can be closed when said monitoring means (S11, S12) indicates that one of the loads is not energized, or that both loads are not energized.

8. Integrated power supply system with two uninterruptible AC power supplies (UPS) (10a, 10b) connected in parallel, each UPS (10a, 10b) having:
- A rectifier- charger (11a 11b) to an electrical network (S) and able to convert the AC from the mains into controlled and regulated direct current;
- an energy storage device (12a, 12b) connected to the rectifier-charger (11a, 11b) and supplied with the direct current from the rectifier-charger (11a, 11b) ;
- an inverter (13a, 13b) energized by the rectifier-charger (11a-11b) or energy storage device (12a, 12b) that converts the DC into clean, regulated AC to power at least one load (L, L1, L2);
- a static switch assembly (14a, 14b) consisting of a static inverter switch and a static backup line switch, arranged between the inverter (13a, 13b) and at least one load (L, L1, L2), acting as an automatic source switching system, capable of preventing any interruption in the supply to the load (L, L1, L2) by supplying the load (L, L1, L2) via a backup line (R);
- a maintenance switch (15a, 15b) configured to supply the load (L, L1, L2) through the backup line (R) to perform maintenance operations on the rectifier-charger (11a, 11b), the energy storage device (12a, 12b), the inverter (13a, 13b) or the static switch assembly (14a, 14b); and
- a line end switch (11, 12) arranged in front of the load (L, L1, L2); the two inverters (13a, 13b) of the two UPSs (10a, 10b) being controlled by a paralleling management module (20) transmitting the signals necessary to synchronize the two inverters with each other, and to balance the current absorbed by the load (L, L1, L2) between the two inverters (13a, 13b);
***characterized in that*** it also includes a management device (25) according to claim 1.

9. Supply system according to claim 8, ***in which*** the two UPSs (10a, 10b) include hardware security against the activation of a single static backup line switch and a connecting switch (13) arranged between the loads (L1, L2), said management device (25) including :
- means for monitoring (Si3) the state of the connecting switch (13); and
- means of generating an inhibition signal (Cb1, Cb2) associated with each hardware safety device of each UPS (10a,10b) capable of controlling the inhibition of the hardware safety device when the said monitoring means (Si3) indicates that the connecting switch (13) is open.

10. Supply system according to claim 9, ***in which*** the said managing device (25) comprises:
- means for mo means of generating an inhibition signal (Cb1, Cb2) associated with each hardware safety device of each UPS (10a, 10b) capable of controlling the inhibition of the hardware safety device when the said monitoring means (Si3) indicates that the connecting switch (13) is open.
- nitoring (S11, S12) the state of energizing of loads (L1, L2); and
- means for controlling an indicator light configured to indicate whether the connecting switch (13) can be operated;
the control means being configured to indicate that the connecting switch (13) can be opened when said monitoring means (Sl1, S12) indicates that the loads (L1, L2) are energized, or that none of the loads (L1, L2) is energized.

11. A power supply system according to claim 10, ***in which*** said management device (25) comprises control means (Sb 1, Sb2) for supervising the state of the maintenance switches (15a, 15b), the control means being configured to indicate that the connecting switch (13) can be closed when said monitoring means (Sb 1, Sb2) indicates that both maintenance switches (15a, 15b) are closed.

12. A power supply system according to claim 10 or 11, ***in which*** said management device (25) includes means for monitoring (Svl, Sv2) the state of the backup line static switches, the control means being configured to indicate that the connecting switch (13) can be closed when said monitoring means (Svl, Sv2) indicates that both backup line static switches are closed.

13. A power supply system according to one of claims 10 to 12, ***in which*** said management device (25) comprises means of monitoring (So1, So2) the state of operation and synchronization of the inverters (13a, 13b), the control means being configured to indicate that the connecting switch (13) can be closed when said monitoring means (So1, So2) indicate that the two inverters (13a, 13b) are in operation and that the two inverters (13a, 13b) are each synchronized by their backup line (R).

14. A power supply system according to one of claims 10 to 13, wherein the control means are configured to indicate that the connecting switch (13) can be closed when said monitoring means (S11, S12) indicates that one of the loads is not energized, or that the loads are not energized.
